# EUROPÄISCHE PATENTSCHRIFT

(11) **EP 1 055 543 B1**
(45) Veröffentlichungstag und Bekanntmachung des Hinweises auf die Patenterteilung: **15.03.2006**
(21) Anmeldenummer: 00108427.6
(22) Anmeldetag: 18.04.2000
(51) Int. Cl.: B60K 35/00, B60K 37/02

(54) **Anzeigeinstrument**
Display device
Dispositif indicateur

(30) Priorität: 28.05.1999 DE 19924429
(43) Veröffentlichungstag der Anmeldung: 29.11.2000
(73) Patentinhaber: SIEMENS AKTIENGESELLSCHAFT, 80333 München (DE)
(72) Erfinder: Winterkorn, Horst, 35435 Wettenberg-Wissmar (DE)

(56) Entgegenhaltungen:
- EP-A- 0 065 040
- DE-A- 3 339 613
- DE-A- 3 622 458
- US-A- 4 924 957
- US-A- 5 825 338
- "Der Neue Porsche 911 Carrera" SONDER AUSGABE DER AUTOMOBILTECHNISCHE ZEITSCHRIFT UND MOTORTECHNISCHE ZEITSCHRIFT, 1997, XP002256466

## Beschreibung

Die Erfindung betrifft ein Anzeigeinstrument für ein Kraftfahrzeug mit zumindest zwei Darstellungsebenen, wobei die erste Darstellungsebene der zweiten Darstellungsebene zumindest teilweise überlagert ist und wobei für die erste Darstellungsebene ein zumindest teilweise transparenter Zustand einstellbar ist.

Ein solches Anzeigeinstrument ermöglicht eine benutzergerechte und bedarfsorientierte Informationsdarstellung in verschiedenen Darstellungsebenen. Hierdurch können die für die jeweiligen Betriebsbedingungen wesentlichen Informationen in der ersten, einem Kraftfahrzeuginsassen zugewandten Darstellungsebene und damit im unmittelbaren Blickfeld der Fahrers angezeigt werden. Zugleich lassen sich dabei die klassischen Zeigerinstrumente durch Anzeigen ergänzen, für die andere Darstellungsformen, beispielsweise Digitalanzeigen, besser geeignet sind. Dabei können Anzeigen mit untergeordneter Bedeutung, beispielsweise die Anzeige der Uhrzeit, auch zeitweise vollkommen ausgeblendet werden, um beispielsweise die Darstellung eines Navigationssystems in den Vordergrund zu bringen. Im nicht angesteuerten Zustand ist die erste Darstellungsebene hierzu im Wesentlichen transparent, so dass die Anzeigen der zweiten Darstellungsebene uneingeschränkt ablesbar sind.

Nachteilig bei dem beschriebenen Stand der Technik wirkt sich aus, dass die Vielzahl der standardmäßig oder optional erhältlichen Anzeigen eine jeweils umfangreiche, insbesondere konstruktive Anpassung des Anzeigeinstrumentes erfordert. Der hiermit verbundene hohe Aufwand bei der Herstellung hat dazu geführt, dass der Einsatz solcher Anzeigeinstrumente in der Praxis bisher von lediglich untergeordneter Bedeutung ist.

Aus der Sonderausgabe der motortechnischen Zeitschrift des Jahres 1997 "Der neue Porsche 911 Carrera" ist bereits eine Anordnung mehrerer Darstellungsebenen eines Anzeigeinstrumentes bekannt, das sichelförmig und rund gestaltete scheibenförmige Darstellungsebenen aufweist. Aus der deutschen Offenlegungsschrift DE 33 39 613 A ist bereits eine Anordnung verschiedener Anzeigen bekannt, die modular an einer gemeinsamen Versorgungsleiste flexibel zusammengestellt angebracht werden können.

Der Erfindung liegt das Problem zugrunde, ein Anzeigeinstrument der eingangs genannten Art so zu gestalten, dass der Aufwand bei der Herstellung wesentlich reduziert werden kann.

Dieses Problem wird erfindungsgemäß mittels eines Anzeigeinstrumentes der eingangs genannten Art gelöst, welches die in Anspruch 1 aufgeführten Merkmale aufweist. Die Unteransprüche beinhalten vorteilhafte Weiterbildungen der Erfindung. Hierdurch kann eine Anpassung des Anzeigeinstrumentes an die gewünschte Informationsdarstellung problemlos durch Austausch der entsprechenden Darstellungsebene erfolgen. Dabei können Zusatzinformationen oder eine spätere Ergänzung der vorhandenen Anzeigen durch Auswechseln der Darstellungsebene realisiert werden. Die stetige Anpassung der Informationsdarstellung an den fortschreitenden Stand der Technik ist somit ebenfalls ohne einen konstruktiven Eingriff möglich.

Hierzu ist eine vorteilhafte Weiterbildung der Erfindung dadurch besonders gut geeignet, dass die austauschbare Darstellungsebene mittels einer Steckverbindung an dem Anzeigeinstrument fixierbar ist. Der zum Austausch der Darstellungsebene erforderliche manuelle Eingriff ist somit mühelos und ohne spezielle Werkzeuge in einfacher Weise durchführbar. Somit kann beispielsweise auch ein lediglich vorübergehender Einsatz spezieller Darstellungsebenen, beispielsweise als Sonderausstattung einer Autovermietung oder eines Fuhrparks, vorgesehen werden. Sie müssen somit nur in geringem Umfang vorgehalten werden.

Besonders günstig ist auch eine Weiterbildung der Erfindung, bei der mit der Fixierung der Darstellungsebene in dem Anzeigeinstrument zugleich auch eine Kontaktierung der Darstellungsebene erfolgt. Dadurch kann ein fehlerhafter Anschluss der austauschbaren Darstellungsebene verhindert werden, so dass der Austausch auch außerhalb einer Fachwerkstatt erfolgen kann. Zugleich kann dabei die Fixierung der Darstellungsebene im Bereich der Vorderseite des Anzeigeinstrumentes erfolgen, so dass der Montageaufwand weiter reduziert werden kann.

Besonders sinnvoll ist dabei auch eine Weiterbildung der Erfindung, bei der das Anzeigeinstrument zur selbsttätigen Erkennung der jeweils eingesetzten Darstellungsebene ausgeführt ist. Daher erfolgt die durch den Austausch der Darstellungsebene gegebenenfalls erforderliche Anpassung der Ansteuerung ohne einen manuellen Eingriff. Hierzu wird insbesondere bei jeder Inbetriebnahme des Kraftfahrzeuges ein Abgleich der vorhandenen Darstellungsebenen und eine anschließende softwareseitige Implementierung durchgeführt. Gegebenenfalls kann auch eine Software-Aktualisierung durch einen Info-Server erfolgen.

Die Darstellungsebenen können im wesentlichen unabhängig voneinander betrieben werden. Besonders nützlich ist hingegen eine Ausführungsform der Erfindung, bei der die Ansteuerung der Darstellungsebenen in Abhängigkeit voneinander erfolgt. Hierdurch kann die Informationsdarstellung in den verschiedenen Darstellungsebenen derart aufeinander abgestimmt sein, dass durch das Zusammenwirken die Ablesbarkeit oder auch die logische Zuordnung verbessert oder vereinfacht wird. So können beispielsweise digitale Anzeigen mit einem Symbol oder auch einem Ablaufschema der entsprechenden Funktion hinterlegt oder auch räumliche Effekte erreicht werden.

Eine andere besonders vorteilhafte Ausführungsform der Erfindung ist dann gegeben, wenn das Anzeigeinstrument zur Aufnahme weiterer Darstellungsebenen ausgeführt ist. Hierdurch können weitere Informationen, die mit den bereits vorhandenen Darstellungsebenen nicht dargestellt werden können, mit Hilfe zusätzlicher Darstellungsebenen realisiert werden. Eine entsprechende Fixierung an dem Anzeigeinstrument ist hierzu insbesondere für einen Betrachter nicht erkennbar und ermöglicht so eine optisch ansprechende Gestaltung des Anzeigeinstrumentes.

Dabei ist eine besonders günstige Weiterbildung der Erfindung auch dadurch gegeben, dass die einem Kraftfahrzeuginsassen zugewandte Darstellungsebene zugleich auch eine für den Kraftfahrzeuginsassen bestimmte Bedienoberfläche aufweist. Eine solche, beispielsweise als Auswahlschalter ausgeführte Bedienoberfläche ermöglicht dem Kraftfahrzeuginsassen eine individuelle Auswahl der gewünschten Informationsdarstellung. Eine solche Bedienoberfläche kann beispielsweise auch zur Bedienung eines in der Darstellungsebene eingeblendeten Satellitennavigationssystemes (GPS) oder für weitere, von der Darstellungsebene oder dem Anzeigeinstrument unabhängige Funktionen genutzt werden.

Eine andere vorteilhafte Ausführungsform der Erfindung ist dann gegeben, wenn das Anzeigeinstrument eine auswechselbare Steuereinheit hat. Hierdurch. können auch solche Informationen dargestellt werden, deren Ansteuerung mit der werkseitig vorhandenen Steuereinheit nicht realisierbar ist. Zugleich kann eine Anpassung der Rechenleistung der Steuereinheit an die schnell fortschreitende Entwicklung durch Austausch der Prozessoreinheit vorgenommen werden.

Eine andere, für den praktischen Einsatz besonders gut geeignete Ausführungsform der Erfindung ist dadurch gegeben, dass das Anzeigeinstrument ein austauschbares Gehäuse hat. Somit kann das Anzeigeinstrument bei unterschiedlichen Kraftfahrzeugen eingesetzt werden, um eine weitgehende Standardisierung von Bauelementen zu erreichen. Dabei ermöglicht das Gehäuse neben dem veränderten optischen Erscheinungsbild auch eine einfache Anbindung an eine vordere Armaturentafel unterschiedlicher Kraftfahrzeuge.

Neben der Informationsdarstellung kann ferner auch eine Abdunkelung bzw. Dimmung der rückwärtigen Darstellungsebene mittels der überlagerten Darstellungsebene vorgenommen werden, um so deren Ablesbarkeit bei veränderlicher Umgebungshelligkeit zu verbessern.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Vorderansicht eines erfindungsgemäßen Anzeigeinstrumentes,
- Fig. 2: eine teilweise geschnittene Seitenansicht des in Figur 1 gezeigten Anzeigeinstrumentes.

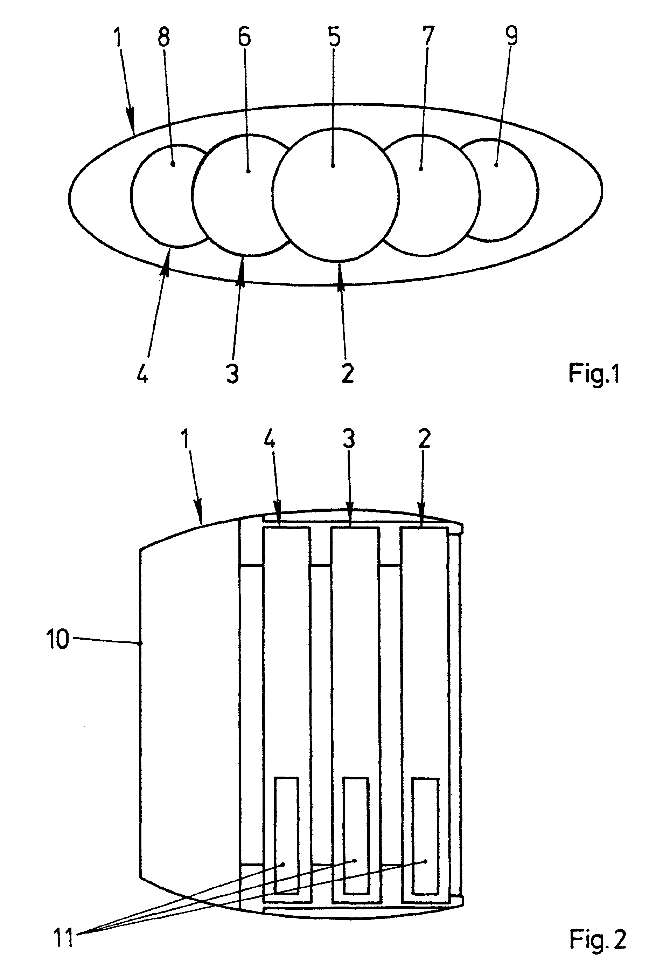

Figur 1 zeigt in einer Vorderansicht eine Prinzipdarstellung eines Anzeigeinstrumentes 1. Zu erkennen sind mehrere, einander teilweise überlagerte Darstellungsebenen 2, 3, 4, wobei eine erste Anzeige 5 der ersten Darstellungsebene 2, zwei Anzeigen 6, 7 der zweiten Darstellungsebene 3 und zwei weitere Anzeigen 8, 9 der dritten Darstellungsebene 4 zugeordnet sind. Die gewünschte Darstellungsebene 2, 3, 4 ist grundsätzliche frei auswählbar und wird beispielsweise nach den aktuellen Betriebsbedingungen vorgenommen. So können beispielsweise Warnhinweise in der ersten, einem nicht dargestellten Betrachter zugewandten Darstellungsebene 2 erscheinen, um so die unmittelbare Aufmerksamkeit des Fahrers zu erreichen.

Die Anordnung der einzelnen Darstellungsebenen 2, 3, 4 wird anhand der Figur 2 weiter verdeutlicht. Diese zeigt in einer teilweise geschnittenen Seitenansicht das Anzeigeinstrument 1 mit einem Gehäuse 10. Die einzelnen Darstellungsebenen 2, 3, 4 sind dabei jeweils mittels einer als Steckverbindung 11 ausgeführten Fixierung in dem Gehäuse 10 derart angeordnet, dass zugleich mit der Fixierung eine Kontaktierung der jeweiligen Darstellungsebene 2, 3, 4 erfolgt. Ein gegebenenfalls vorzunehmender Austausch der Darstellungsebene 2, 3, 4 kann dabei ohne zusätzliche Anpassung einer nicht dargestellten Steuereinheit problemlos vorgenommen werden. Hierzu nimmt die Steuereinheit zunächst eine Identifizierung der jeweiligen Darstellungsebene 2, 3, 4 und anschließend eine Anpassung des Steuerprogrammes vor. Dabei können aktuelle Steuerprogramme und Bildschirmtreiber von einem Daten-Server abgerufen werden. Insbesondere erfolgt die Ansteuerung derart, dass ein nicht angesteuerter Abschnitt der jeweiligen Darstellungsebene 2, 3, 4 im wesentlichen transparent angesteuert wird und die dahinter angeordneten Darstellungsebenen 2, 3, 4 ablesbar sind.

## Patentansprüche

1. Anzeigeinstrument für ein Kraftfahrzeug mit zumindest zwei Darstellungsebenen, wobei die erste Darstellungsebene der zweiten Darstellungsebene zumindest teilweise überlagert ist und wobei für die erste Darstellungsebene ein zumindest teilweise transparenter Zustand einstellbar ist, wobei zumindest die erste Darstellungsebene (2) austauschbar mit dem Anzeigeinstrument (1) verbunden ist, wobei eine Ansteuerung von Abschnitten der jeweiligen Darstellungsebene (2, 3, 4) derart erfolgt, dass ein nicht angesteuerter Abschnitt der jeweiligen Darstellungsebene (2, 3, 4) im Wesentlichen transparent angesteuert wird und die dahinter angeordneten Darstellungsebenen (2, 3, 4) ablesbar sind.

2. Anzeigeinstrument nach Anspruch 1, **dadurch gekennzeichnet, dass** die austauschbare Darstellungsebene (2, 3, 4) mittels einer Steckverbindung (11) an dem Anzeigeinstrument (1) fixierbar ist.

3. Anzeigeinstrument nach Anspruch 1 oder 2, **dadurch gekennzeichnet, dass** mit der Fixierung der Darstellungsebene (2, 3, 4) in dem Anzeigeinstrument (1) zugleich auch eine Kontaktierung der Darstellungsebene (2, 3, 4) erfolgt.

4. Anzeigeinstrument nach einem der vorhergehenden Ansprüche, **dadurch gekennzeichnet, dass** das Anzeigeinstrument (1) zur selbsttätigen Erkennung der jeweils eingesetzten Darstellungsebene (2, 3, 4) ausgeführt ist.

5. Anzeigeinstrument nach einem der vorhergehenden Ansprüche, **dadurch gekennzeichnet, dass** die Ansteuerung der Darstellungsebenen (2, 3, 4) in Abhängigkeit voneinander erfolgt.

6. Anzeigeinstrument nach einem der vorhergehenden Ansprüche, **dadurch gekennzeichnet, dass** das Anzeigeinstrument (1) zur Aufnahme weiterer Darstellungsebenen (2, 3, 4) ausgeführt ist.

7. Anzeigeinstrument nach einem der vorhergehenden Ansprüche, **dadurch gekennzeichnet, dass** die einem Kraftfahrzeuginsassen zugewandte Darstellungsebene (2) zugleich auch eine für den Kraftfahrzeuginsassen bestimmte Bedienoberfläche aufweist.

8. Anzeigeinstrument nach einem der vorhergehenden Ansprüche, **dadurch gekennzeichnet, dass** das Anzeigeinstrument (1) eine auswechselbare Steuereinheit hat.

9. Anzeigeinstrument nach einem der vorhergehenden Ansprüche, **dadurch gekennzeichnet, dass** das Anzeigeinstrument (1) ein austauschbares Gehäuse (10) hat.

## Claims

1. Indicating instrument for a motor vehicle having at least two display levels, the first display level being at least partially superposed on the second display level and it being possible for an at least partially transparent state to be set for the first display level, **characterized in that** at least the first display level (2) being exchangeably connected to indicating instrument (1), the activation of portions of the respective display level (2, 3, 4) taking place in such as way that a non-actuated portion of the respective display level (2, 3, 4) is made essentially transparent and the display levels (2, 3, 4) arranged behind it are readable.

2. Indicating instument according to Claim 1, **characterized in that** the exchangeable display level (2, 3, 4) can be fixed on indicating instrument (1) by means of a plug-in connection (11).

3. Indicating instument according to Claim 1 or 2, **characterized in that** the fixing of the display level (2, 3, 4) in indicating instrument (1) at the same time also establishes electrical contact of the display level (2, 3, 4).

4. Indicating instument according to one of the preceding claims, **characterized in that** indicating instrument (1) is designed for automatic detection of the display level (2, 3, 4) respectively used.

5. Indicating instument according to one of the preceding claims, **characterized in that** the activation of the display levels (2, 3, 4) takes place in dependence on one another.

6. Indicating instument according to one of the preceding claims, **characterized in that** indicating instrument (1) is designed for receiving further display levels (2, 3, 4).

7. Indicating instument according to one of the preceding claims, **characterized in that** the display level (2) facing a motor vehicle occupant also has at the same time an operator interface intended for the motor vehicle occupant.

8. Indicating instument according to one of the preceding claims, **characterized in that** indicating instrument (1) has an exchangeable control unit.

9. Indicating instument according to one of the preceding claims, **characterized in that** indicating instrument (1) has an exchangeable housing (10).

## Revendications

1. Appareil indicateur destiné à un véhicule automobile et comportant, au moins, deux plans de représentation, où le premier plan de représentation est au moins partiellement superposé au deuxième plan de représentation et où, pour le premier plan de représentation, il est possible de régler un état au moins partiellement transparent, où au moins le premier plan de représentation (2) est lié à l'appareil indicateur (1) de telle manière qu'il peut être remplacé, où une commande de parties du plan de représentation respectif (2, 3, 4) est effectuée de telle manière qu'une partie non excitée du plan de représentation respectif (2, 3, 4) est commandée, essentiellement, en transparence et que les plans de représentation (2, 3, 4), qui sont disposés à l'arrière, sont visibles.

2. Appareil indicateur selon la revendication 1 **caractérisé par le fait que** le plan de représentation (2, 3, 4) interchangeable est fixé à l'appareil indicateur au moyen d'une liaison enfichable (11).

3. Appareil indicateur selon la revendication 1 ou 2 **caractérisé par le fait que**, avec la fixation du plan de représentation (2, 3, 4) dans l'appareil indicateur (1), une mise en contact électrique du plan de représentation (2, 3, 4) est également en même temps réalisée.

4. Appareil indicateur selon l'une des revendications précédentes **caractérisé par le fait que** l'appareil indicateur (1) est conçu pour la reconnaissance automatique du plan de représentation (2, 3, 4) utilisé dans chaque cas.

5. Appareil indicateur selon l'une des revendications précédentes **caractérisé par le fait que** la commande des plans de représentation (2, 3, 4) se fait en fonction les uns des autres.

6. Appareil indicateur selon l'une des revendications précédentes **caractérisé par le fait que** l'appareil indicateur (1) est conçu pour accepter des plans de représentation (2, 3, 4) supplémentaires.

7. Appareil indicateur selon l'une des revendications précédentes **caractérisé par le fait que** le plan de représentation (2) tourné vers un passager du véhicule automobile comporte également une interface utilisateur destinée au passager du véhicule automobile.

8. Appareil indicateur selon l'une des revendications précédentes **caractérisé par le fait que** l'appareil indicateur (1) a une unité de commande interchangeable.

9. Appareil indicateur selon l'une des revendications précédentes **caractérisé par le fait que** l'appareil indicateur (1) a un boîtier (10) interchangeable.
